**Europäisches Patentamt**

**European Patent Office**

**Office européen des brevets**

(11) Numéro de publication: **0 079 253**
**B1**

(12) **FASCICULE DE BREVET EUROPEEN**

(45) Date de publication du fascicule du brevet:
**19.02.86**

(21) Numéro de dépôt: **82401806.3**

(22) Date de dépôt: **04.10.82**

(51) Int. Cl.⁴: **B 60 R 13/08,** G 10 K 11/16

(54) **Garniture de pavillon pour véhicule automobile.**

(30) Priorité: **09.11.81 FR 8120926**

(43) Date de publication de la demande:
**18.05.83 Bulletin 83/20**

(45) Mention de la délivrance du brevet:
**19.02.86 Bulletin 86/8**

(84) Etats contractants désignés:
**DE GB IT**

(56) Documents cités:
**FR - A - 1 166 394**
**FR - A - 2 256 658**
**US - A - 2 069 413**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Kindt, Jean-Marie, 111 Rue de l'Hautil, F-78510 Triel sur Seine (FR)**

(74) Mandataire: **Moncheny, Michel et al, c/o Cabinet Lavoix 2 Place d'Estienne d'Orves, F-75441 Paris Cedex 09 (FR)**

## Description

Cette invention concerne une garniture intérieure pour un pavillon de véhicule automobile formant panneau absorbant acoustique en vue d'atténuer le bruit ambiant dans l'habitacle.

Il est courant d'utiliser, pour la garniture intérieure d'un pavillon de véhicule, un panneau constitué par un matériau permable aux sons, tel que des fibres agglomérées ou une mousse à cellules ouvertes. Une telle garniture assure une bonne atténuation des sons de fréquence relativement élevées, par exemple, supérieures à 3 000 Hz. Par contre, elle est pratiquement sans effet pour atténuer les sons à basses fréquences, en particulier les ondes stationnaires qui s'installent dans l'habitacle et qui correspondent aux modes propres de la cavité que forme cet habitacle.

Afin de résoudre ce problème, le document FR-2 256 658 prévoit d'incorporer des résonateurs de Helmholtz à des panneaux de garnissage à l'intérieur d'un véhicule automobile. Cependant, les solutions envisagées dans ce document sont relativement compliquées à mettre en œuvre.

L'invention se propose de remplir cette même fonction d'élargissement de la bande de fréquences pour laquelle on obtient une bonne absorption, par des moyens plus simples que ceux décrits dans le document analysé ci-dessus.

A cet effet, elle concerne une garniture de pavillon présentant une face intérieure à peu près parallèle à la surface du pavillon et à laquelle est incorporé au moins un corp creux constituant un résonateur de Helmholtz, caractérisé en ce que, comme connu en soi, la garniture est constituée par un panneau formé principalement par un matériau permable aux sons et en ce que le ou chaque corps creux est délimité entre la surface du pavillon et une zone du panneau dont l'épaisseur est réduite pour former une membrane dont la perméabilité aux sons est plus faible que celle du matériau constituant l'essentiel du panneau.

De préférence, les zones formant résonateurs sont disposées chacune au-dessus de l'emplacement de la tête des occupants du véhicule.

Suivant un mode de réalisation, le panneau comporte une première membrane perméable aux sons, parallèle à la surface du pavillon et une seconde membrane perméable aux sons formant des ondulations successives, les sommets des ondulations d'une face étant solidaires de la première membrane, tandis que les sommets des ondulations de l'autre face sont solidaires du pavillon.

Un exemple de réalisation de l'invention fait l'objet de la description qui suit, en référence aux dessins joints dans lesquels:

– la Fig. 1 est une vue en plan d'un pavillon de véhicule automobile muni d'une garniture selon l'invention;

– la Fig. 2 est une section, à plus grande échelle, selon la ligne 2–2 de la Fig. 1;

– la Fig. 3 est une vue analogue à celle de la Fig. 1, d'une variante;

– la Fig. 4 est une section, à plus grande échelle, selon la ligne 4–4 de la Fig. 3.

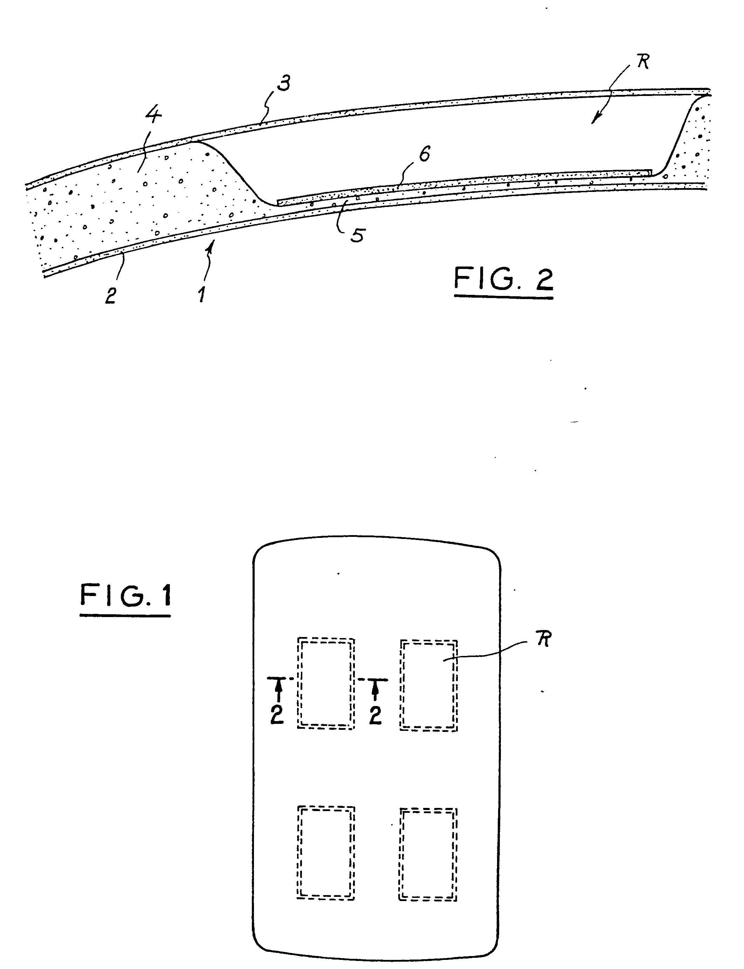

Comme le montre la Fig. 2 la garniture est constituée par un panneau 1 présentant une face intérieure 2 sensiblement parallèle à la surface du pavillon 3. Ce panneau est formé, principalement, par un matériau 4 perméable aux sons, par exemple des fibres agglomérées ou une mousse de polyuréthane à cellules ouvertes. Son épaisseur peut être de l'ordre de 20 à 25 mm.

La face intérieure 2 peut être constituée par une feuille d'un matériau de finition, collée sur le matériau 4 ou, si ce dernier est une mousse, par une peau formée avec la mousse, l'essentiel étant que cette face reste permable aux sons.

Suivant l'invention, le panneau 1 comporte des zones R dans lesquelles sont épaisseur est réduite pour former une simple membrane 5 doublée d'une feuille 6 en un matériau présentant une perméabilité aux sons nettement plus faible que celle du matériau 4. Un tel matériau peut, par exemple, être constitué par un aggloméré de fibres plus comprimées ou une mousse plus dense que pour le matériau 4.

La membrane 5 et la feuille 6 constituent alors, avec le pavillon 3 et la lame d'air qui les sépare, un résonateur assurant une bonne atténuation des sons à basses fréquences.

Comme représenté sur la Fig. 1, chaque résonateur R est disposé au-dessus de l'emplacement de la tête d'un occupant du véhicule. Grâce à cette disposition, on obtient, au niveau des oreilles des occupants, une très bonne atténuation des ondes stationnaires à basses fréquences qui s'installent dans l'habitacle du véhicule et qui correspondent aux modes propres de la cavité que constitue l'habitacle.

Ce résultat particulièrement intéressant est obtenu de façon très simple, sans aucune modification de l'aspect de la garniture puisque la face intérieure du panneau est continue, même à l'emplacement du résonateur R.

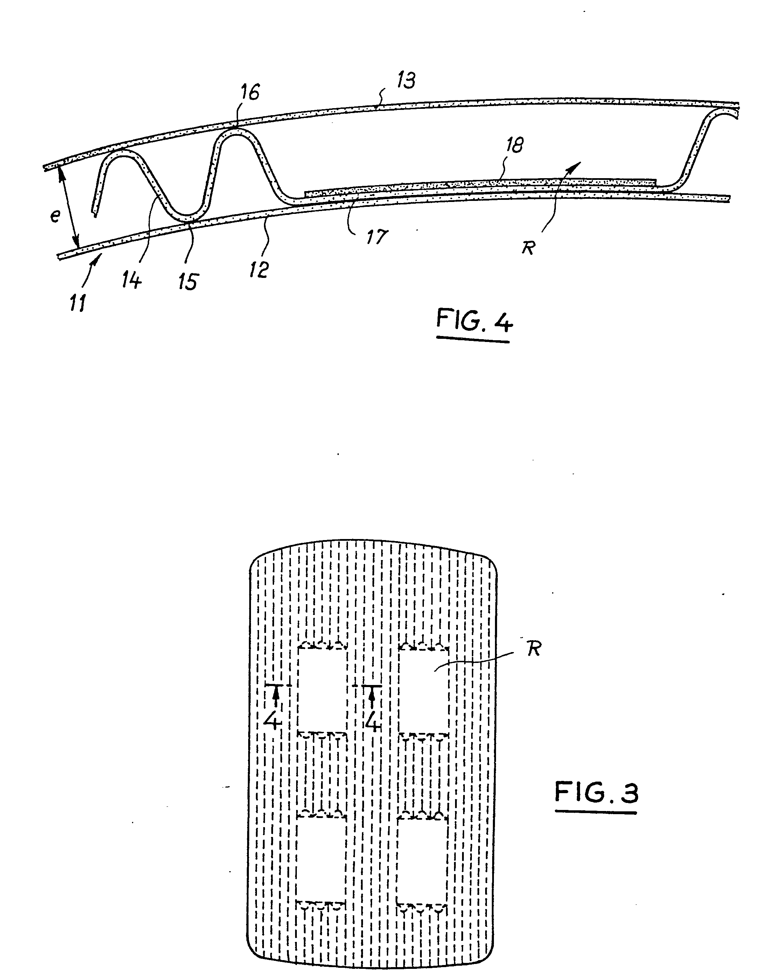

Dans le mode de réalisation des Fig. 3 et 4 le panneau absorbant 11 comprend, principalement une première feuille ou membrane 12 disposée parallèlement à la surface du pavillon 13 et une seconde feuille ou membrane 14 à ondulations successives, par exemple de forme sinusoïdale.

Chacune de ces membranes possède une perméabilité élevée aux sons. Elle peut être constituée, par exemple par des fibres agglomérées ou par une mousse à cellules ouvertes, son épaisseur étant d'environ 2 à 6 mm.

Les sommets 15 des ondulations d'une face de la membrane 14 sont solidarisés à la membrane 12 par collage ou soudage tandis que les sommets 16 des ondulations de l'autre face sont solidarisés au pavillon 13 par collage.

La membrane 12 a un pouvoir d'absorption maximal pour les ondes sonores dont le ventre se situe au droit de la membrane. C'est ainsi que, si l'on désigne par $e$ la distance entre la membrane 12 et la paroi 13 constituée par le pavillon, l'absorption est maximale pour les sons de longueur d'onde

$\lambda = 4$ e. Par exemple, avec e $= 20$ mm, on a
$\lambda = 8$ cm, ce qui correspond à une fréquence

$$F = \frac{34.000}{\lambda} = \frac{34.00}{8} = 4.200 \text{ Hz.}$$

La distance entre la membrane 14 et le pavillon 13 étant variable et inférieure à e, la membrane 14 a une bonne efficacité d'absorption pour les sons de longueur d'onde inférieure à 4 e, c'est à dire pour les fréquence supérieures à F.

La membrane 14 assure on outre le raidissement du panneau, tandis que la membrane 12 assure la présentation.

Dans les zones R les ondulations de la membrane 14 sont interrompues, la partie correspondante 17 de cette membrane étant alors plaquée contre la membrane 12. Dans ces zones R, une troisième membrane 18 est collée contre la membrane 14. Cette troisième membrane possède une perméabilité aux sons nettement plus faible que celle des membranes 12 et 14. Elle permet de constituer, avec le pavillon 13 et la lame d'air qui les sépare, un résonateur assurant une bonne atténuation des sons de fréquences inférieures à la fréquence F.

La troisième membrane peut être constituée par un aggloméré de fibres plus comprimées ou une mousse plus dense que pour les membranes 12 et 14, afin de réduire la perméabilité aux sons, la valeur de la perméabilité étant choisie, dans chaque cas, en fonction des fréquences à absorber.

## Revendications

1. Garniture de pavillon présentant une face intérieure (2; 12) à peu près parallèle à la surface (3; 13) du pavillon et à laquelle est incorporé au moins un corps creux constituant un résonateur de Helmholtz (R), caractérisée en ce que, comme connu en soi, la garniture est constituée par un panneau (1; 11) formé principalement par un matériau perméable aux sons et en ce que le ou chaque corps creux est délimité entre la surface du pavillon et une zone (5; 17) du panneau dont l'épaisseur est réduite pour former une membrane (5, 6; 17, 18) dont la perméabilité aux sons est plus faible que celle du matériau constituant l'essentiel du panneau.

2. Garniture suivant la revendication 1, caractérisée en ce que les zones (R) formant résonateurs sont disposées chacune au-dessus de l'emplacement de la tête des occupants du véhicule.

3. Garniture suivant la revendication 1, caractérisée en ce que dans les zones (R) formant résonateurs, la face intérieure du panneau est doublée par une feuille (6, 18) en un matériau relativement peu perméable aux sons.

4. Garniture suivant l'une quelconque des revendications 1 à 3, caractérisée en ce que le panneau est essentiellement formé d'un matériau tel qu'une mousse à cellules ouvertes ou des fibres agglomérées.

5. Garniture suivant l'une quelconque des revendications 1 à 4, caractérisée en ce que le panneau est formé d'une feuille (12) à peu près plane sur laquelle est fixée une feuille ondulée (14).

6. Garniture suivant l'une quelconque des revendications 1 à 5, caractérisée en ce que la face intérieure (2, 12) du panneau est continue.

## Patentansprüche

1. Dachauskleidung mit einer zur Dachoberfläche (3; 13) im wesentlichen parallelen Innenseite (2, 12), in der mindestens ein Hohlkörper, der einen Helmholtz-Resonator (R) bildet, inkorporiert ist, dadurch gekennzeichnet, dass die Auskleidung in an sich bekannter Weise aus einer Platte (1; 11) besteht, die im wesentlichen aus einem schalldurchlässigen Material gefertigt ist, und dadurch, dass der oder jeder Hohlkörper durch die Dachseite und durch einen Bereich (5; 17) der Platte eingegrenzt ist, wobei dort die Dicke der Platte reduziert ist, um eine Membran (5, 6; 17, 18) zu bilden, dessen Schalldurchlässigkeit geringer ist als die des Materials, aus dem die Platte im wesentlichen besteht.

2. Dachauskleidung nach Anspruch 1, dadurch gekennzeichnet, dass die die Resonatoren bildenden Bereiche (R) jeweils oberhalb der Kopfposition der Fahrzeuginsassen angeordnet sind.

3. Dachauskleidung nach Anspruch 1, dadurch gekennzeichnet, dass in den die Resonatoren bildenden Bereichen (R) die Innenseite der Platte mit einer Folie (6, 18) aus einem relativ wenig schalldurchlässigen Material verstärkt ist.

4. Dachauskleidung nach einem der Ansprüche 1 bis 3, dadurch gekennzeichnet, dass die Platte im wesentlichen aus einem Schaumstoff mit offenen Zellen oder aus agglomerierten Fasern besteht.

5. Dachauskleidung nach einem der Ansprüche 1 bis 4, dadurch gekennzeichnet, dass die Platte aus einer Folie (12) geformt ist, die im wesentlichen plan ist und auf der eine gewellte Folie (14) befestigt ist.

6. Dachauskleidung nach einem der Ansprüche 1 bis 5, dadurch gekennzeichnet, dass die Innenseite (2, 12) der Platte durchgehend ist.

## Claims

1. A roof trim having an inner side (2; 12) roughly parallel to the surface (3; 13) of the roof and in which is incorporated at least one hollow body constituting a Helmholtz resonator (R) characterised in that, in the known manner, the trim is formed by a panel (1; 11) formed mainly by a material permeable to sounds and the or each hollow body is defined between the surface of the roof and a zone (5;17) of the panel whose thickness is reduced so as to form a membrane (5; 6; 17;18) whose permeability to sounds is lower than that of the material constituting the main part of the panel.

2. A trim according to claim 1, characterised in that the zones (R) forming resonators are each disposed above the location of the head of the occupants of the vehicle.

3. A trim according to claim 1, characterised in that in the zones (R) forming resonator the inner side of the panel is lined with a sheet (6; 18) of a material which is relatively little permeable to sounds.

4. A trim according to any one of the claims 1 to 3, characterised in that the panel is mainly formed by a material such as a foam having open cells or agglomerated fibres.

5. A trim according to any one of the claims 1 to 4, characterised in that the panel is formed by a roughly planar sheet (12) on which a corrugated sheet (14) is fixed.

6. A trim according to any one of the claims 1 to 5, characterised in that the inner side (2; 12) of the panel is continuous.

FIG. 2

FIG. 1

FIG. 4

FIG. 3

7